# EUROPÄISCHE PATENTSCHRIFT

(11) **EP 4 078 082 B1**
(45) Veröffentlichungstag und Bekanntmachung des Hinweises auf die Patenterteilung: **11.09.2024**
(21) Anmeldenummer: 20855883.3
(22) Anmeldetag: 18.12.2020
(51) Int. Cl.: G01B 21/06, G01B 7/02

(54) **MESSVORRICHTUNG ZUR LÄNGENMESSUNG VON DICHTUNGSPROFILEN**
MEASURING DEVICE FOR MEASURING THE LENGTH OF SEALING PROFILES
DISPOSITIF DE MESURE POUR MESURER LA LONGUEUR DE PROFILÉS D'ÉTANCHÉITÉ

(30) Priorität: 20.12.2019 DE 102019135647
(43) Veröffentlichungstag der Anmeldung: 26.10.2022
(73) Patentinhaber: ATN Hölzel GmbH, 02736 Oppach (DE)
(72) Erfinder: GEPPERT, Immo, 02736 Oppach (DE)
(74) Vertreter: Schied, Sebastian
(86) Internationale Anmeldenummer: PCT/DE2020/101081
(87) Internationale Veröffentlichungsnummer: WO 2021/121488

(56) Entgegenhaltungen:
- DE-A1- 102014 112 185
- DE-U1- 20 216 704
- JP-A- H06 300 553

## Beschreibung

Die Erfindung betrifft einen Applikationskopf einer Dichtungsprofilapplikationsvorrichtung mit einer Messvorrichtung zur Längenmessung von Dichtungsprofilen.

Hintergrund der Erfindung ist, dass mittels Dichtungsprofilapplikationsvorrichtungen ein Dichtungsprofil durch Vorschub mittels Transportvorrichtung von einer Spule/Haspel oder einem Depot oder Puffer abzuziehen und mittels Applikationsrolle auf ein Karosserieteil entsprechend der Vorgaben aufzubringen. Das Dichtungsprofil ist dazu mit einer Klebefläche versehen, wobei die Klebefläche mit einem Trennband - im Weiteren als Liner bezeichnet - abgedeckt ist, das erst unmittelbar vor dem Aufbringen des Dichtungsprofils auf das Karosserieteil abgezogen/entfernt wird.

Ein weiterer Hintergrund der Erfindung ist darin zu sehen, dass die Vorrichtung zugleich die Dehnung als auch die Stauchung des Dichtungsprofilgummis messen oder erfassen soll. Das zu applizierende Karosserieteil kann in verschiedene Segmente eingeteilt sein. Der vorgegebene Wert der Stauchung oder Dehnung kann in jedem Segment unterschiedlich groß sein. Mit Hilfe der Messvorrichtung zur Längenmessung kann die Istlänge pro Segment ermittelt werden. Dadurch wird eine segmentweise Auswertung der Stauchung bzw. Dehnung des Dichtungsprofils ermöglicht.

Es sind unterschiedliche Messvorrichtungen bekannt, die dazu vorgesehen sind, in einer Dichtungsprofilapplikationsvorrichtung die Länge des durch die Transportvorrichtung vorgeschobenen Dichtungsprofils zu messen.

So sind aus der WO 2016030131 A1 eine Vorrichtung und ein Verfahren bekannt, das dazu vorgesehen ist, die Dehnung beziehungsweise Stauchung eines applizierten, selbstklebenden Dichtungsprofils an einem Karosserieteil eines Fahrzeugs zu bestimmen. Diese Druckschrift wurde auch als EP 3043953 B1 veröffentlicht. Zur Messung der Länge des Dichtungsprofils ist ein Messwertaufnehmer mit einer auf dem Dichtungsprofil abrollenden Messrolle vorgesehen, die vor dem Antriebssystem angeordnet ist.

Weiterhin sind Messvorrichtungen bekannt, die, wie in DE 20216704 U1 offenbart, für die Längenmessung von Schläuchen, Kabeln oder Rohren bestimmt sind. Hier ist die Messvorrichtung durch ein über Umlenkrollen umlaufendes Endlosglied, wie beispielsweise einen Riemen, realisiert. Eine Ausführungsform sieht vor, dass ein umlaufendes Endlosglied angetrieben wird und somit dem Vorschub des zu vermessenden Gegenstandes dient und ein zweites, gegenüberliegend angeordnetes, umlaufendes Endlosglied zur Längenmessung verwendet wird.

Aus der Druckschrift EP 496049 A1 ist eine Kabellängenmessvorrichtung mit einer, mit zwei einander gegenüberliegend angeordneten Riemenantrieben ausgebildeten, Transportvorrichtung bekannt. Außerhalb der Riemenantriebe ist eine Messrolle angeordnet.

Die Aufgabe der Erfindung ist es, einen Applikationskopf einer Dichtungsprofilapplikationsvorrichtung mit einer Messvorrichtung bereitzustellen, die es ermöglicht, die Länge von auf Karosserieteilen von Fahrzeugen aufzubringenden Dichtungsprofilgummis zu messen. Die Längenmessung soll möglichst präzise erfolgen. Dementsprechend soll Schlupf zwischen dem Dichtungsprofil und dem Messsystem vermieden werden.

Die Erfindung bezieht sich auf einen Applikationskopf einer Dichtungsprofilapplikationsvorrichtung mit einer Messvorrichtung zur Längenmessung von Dichtungsprofilen Die Messvorrichtung umfasst ein über mindestens zwei Rollen umlaufendes Messband, wobei das Messband und/oder mindestens eine der Rollen mit einem Messwerterfassungssystem zusammenwirken. Dem Messband gegenüberliegend ist eine Transportvorrichtung mit einem über Rollen umlaufenden Transportband angeordnet. Zwischen dem umlaufenden Messband und dem umlaufenden Transportband wird das Dichtungsprofil vom Transportband bewegt/vorgeschoben.

Das Messband wird durch die Bewegung des Dichtungsprofils mitbewegt. Dieses Mitbewegen erfolgt vorzugsweise spannungs- oder hemmungsfrei, so dass dadurch ein schlupffreies Messen begünstigt wird.

Die Erfindungsaufgabe wird mit den Merkmalen des Anspruchs 1 gelöst. Gemäß der erfinderischen Konzeption ist es vorgesehen, dass die Messvorrichtung - und somit auch die gegenüberliegend angeordnete Transportvorrichtung - in einem Applikationskopf der Dichtungsprofilapplikationsvorrichtung angeordnet sind und dass sich ein Messbandkontaktbereich des Dichtungsprofils mit dem Messband länger erstreckt als ein Transportbandkontaktbereich des Dichtungsprofils mit dem Transportband.

Die Profildichtung wird dem Applikationskopf dehnungsfrei zugeführt. Die Messvorichtung ist im Applikationskopf so angeordnet, dass diese unmittelbar vor der gezielten Stauchung des Dichtungsprofil erfolgt. Damit wird die tatsächliche Länge Dichtungsprofil ohne Dehnung beziehungsweise Stauchung gemessen.

Der Messkontaktbereich erstreckt sich länger als der Transportkontaktbereich. Durch den längeren Messkontaktbereich wird eine größere Kontaktfläche generiert. Dadurch resultiert eine längere oder weiträumige Haftung des Messbandes am Liner. Somit ist ein Schlupf nahezu ausgeschlossen, so dass das Messergebnis wesentlich genauer als bei bekannten Messvorrichtungen ist. Ein weiterer Vorteil ist darin zusehen, dass das Dichtungsprofil nicht durch Zähne, wie Anspruch 18 der Druckschrift WO 2016030131 A1 vorgeschlagen, beschädigt wird.

Vorteilhafte Weiterbildungen der Erfindung sind in den nachgeordneten Ansprüchen angegeben.

Einer vorteilhaften Ausbildung der Erfindung entsprechend ist vorgesehen, dass das Messband auf der einem Liner des Dichtungsprofils zugewandten Seite eine glatte, elastische und/oder adhäsive Oberfläche aufweist. Als Liner wird ein Trennband bezeichnet, dass auf der Klebefläche des Dichtungsprofils zum Schutz derselben und zur Verhinderung von ungewollten Verklebungen aufgebracht ist. Der Liner wird unmittelbar vor dem Aufbringen und Aufkleben des Profilgummis auf das Karosserieteil abgezogen.

Durch die glatte, elastische und/oder adhäsive Oberfläche des Messbandes wird eine gute Haftung des Messbandes mit dem auf dem Dichtungsprofil befindlichen Liner im Kontaktbereich des Messbands mit dem Dichtungsprofil realisiert. Dementsprechend kann der Schlupf zwischen Liner und Messband minimiert/nahezu vermieden und somit die Länge des Dichtungsprofils mit höchster Präzision ermittelt werden. Die adhäsive Wirkung wird durch eine geeignete/vorteilhafte Kombination der verwendeten Materialen für den Linier und die Oberfläche des Messbandes erreicht.

Einer vorteilhaften Ausbildung der Erfindung entsprechend ist vorgesehen, dass die dem Liner des Dichtungsprofils zugewandte Seite des Messbandes beispielsweise mit den Materialeren Kautschuk und/oder Polyurethan ausgeführt ist.

Die beispielhaft genannten Materialien sind glatt, elastisch und/oder weisen eine adhäsive Oberfläche auf. Damit sind sie besonders vorteilhaft geeignet, eine gute Haftung zwischen Messband und Liner zu gewährleisten und somit eine schlupfvermeidende und somit präzise Längenmessung zu ermöglichen.

Erfindungsgemäß ist weiterhin vorgesehen, dass gegenüberliegend zu einem Überstandsbereich des Messbandes auf der Seite des Transportbandes mindestens eine Andrückrolle und/oder andere Führungs- und Andrückelemente angeordnet sind.

Durch die Andrückrolle und gegebenenfalls die anderen Führungs- und Andrückelemente wird das Dichtungsprofil an das Messband angedrückt, so dass vorteilhaft eine haftende Verbindung zwischen Messband und Liner im gesamten Messkontaktbereich erreicht werden kann. Der wirksame Messkontaktbereich wird damit im Vergleich zum Transportkontaktbereich um den Überstandsbereich vergrößert.

Entsprechend einer weiteren vorteilhaften Ausbildung der Erfindung ist vorgesehen, dass die Andrückrolle mantelseitig ein umlaufendes Profil aufweist.

Das mantelseitige Profil der Andrückrolle ist in einer bevorzugten Ausführung konkav ausgebildet. Damit kann vorteilhaft eine seitliche Führung des transportierten Dichtungsprofils erfolgen. Die seitliche Führung des Dichtungsprofils bewirkt eine präzise Ausrichtung des Dichtungsprofils auf dem Messband und somit eine gute Haftung im Messkontaktbereich. Auch die anderen Führungs- und Andrückelemente können entsprechend profiliert sein und damit die oben beschriebenen Effekte bewirken.

Bei einer alternativen Ausführung der profilierten Andrückrolle ist vorgesehen, dass das mantelseitig umlaufende Profil der Andrückrolle mit dem Profil des auf der Andrückrolle ablaufenden Dichtungsprofils korrespondiert. Damit wird ein gleichmäßiger Druck ausgeübt, ohne dass dabei das Dichtungsprofil deformiert wird. Somit wird das Dichtungsprofil gleichmäßig an das Messband herangedrückt, was eine gute Haftung auf dem Messband vorteilhaft bewirkt.

Gemäß einer vorteilhaften Ausgestaltung der Erfindung ist vorgesehen, dass die Messvorrichtung gegenüber der Transportvorrichtung und/oder die Transportvorrichtung gegenüber der Messvorrichtung mittels mindestens einer Verschiebevorrichtung quer zur Transportrichtung des Dichtungsprofiles verschiebbar angeordnet sind/ist.

Durch die Verschiebevorrichtung kann der Anpressdruck des Messbandes und des Transportbandes sowie der Andrückrolle auf das Dichtungsprofil variiert werden. Mit höherem Anpressdruck wird die Haftung verbessert. Gleichfalls ist es dadurch möglich, die Vorrichtung an unterschiedlich starke Dichtungsprofile anpassen zu können. Zusammen mit der Transportvorrichtung oder auch separat können die Andrückrolle und/oder andere Führungs- und Andrückelemente verschiebbar angeordnet sein, um eine gleichmäßige Führung des Profildichtgummis und einen gleichmäßigen Andruck an das Messband zu gewährleisten.

Entsprechend einer weiteren vorteilhaften Ausbildung der Erfindung ist vorgesehen, dass die Verschiebung von Messvorrichtung und Transportvorrichtung, gegebenenfalls einschließlich der Andrückrolle und/oder anderer Führungs- und Andrückelemente, zueinander in gleichem Maße erfolgt. Damit bleibt die Mittellinie des Dichtungsprofils unverändert, so dass die Positionierungen weiterer Führungselemente des Applikationskopfes nicht angepasst werden müssen.

Erfindungsgemäß ist vorgesehen, dass das Messwerterfassungssystem als ein Drehgeber, insbesondere als ein Drehinkrementalgeber, ausgebildet ist. Vorzugsweise ist der Drehinkrementalgeber in eine Umlenkrolle integriert und erfasst den Drehwinkel der Umlenkrolle sehr präzise wie mit mindestens 200 Impulsen pro Umdrehung, wie beispielsweise 2000 Impulsen pro Umdrehung. Der Drehwinkel verhält sich proportional zum zurückgelegten Weg des Messbandes. Der Drehwinkel der Umlenkrolle wird durch einen Sensor erfasst und zur Auswerteeinheit weitergeleitet. Der Drehgeber, insbesondere Drehinkrementalgeber, ermittelt somit die Länge des ablaufenden Messbandes, das bei erfindungsgemäß vermiedenem Schlupf der Länge des vorgeschobenen Dichtungsprofils entspricht.

Ein in die Umlenkrolle integrierter Drehinkrementalgeber bietet eine sehr kostengünstige Lösung zur Erfassung der Längenmessdaten.

Mehrere Ausführungsbeispiele der Erfindung sind in den Zeichnungen dargestellt und werden im Folgenden näher beschrieben. Es zeigen
Fig. 1 eine perspektivische Seitenansicht eines Applikationskopfes einer Dichtungsprofilapplikationsvorrichtung mit einer Messvorrichtung, einer Transportvorrichtung und einer Andrückrolle sowie einem Dichtungsprofil,
Fig. 2 eine perspektivische Seitenansicht eines Applikationskopfes einer Dichtungsprofilapplikationsvorrichtung mit einer Messvorrichtung und einer Transportvorrichtung sowie einem Dichtungsprofil,
Fig. 3 eine perspektivische Seitenansicht eines Applikationskopfes einer Dichtungsprofilapplikationsvorrichtung mit einer Messvorrichtung, einer Transportvorrichtung und einer Andrückrolle,
Fig. 4 eine perspektivische Seitenansicht eines Applikationskopfes einer Dichtungsprofilapplikationsvorrichtung mit einer Messvorrichtung und einer Transportvorrichtung und
Fig. 5 eine Schnittdarstellung durch das Messband und das Dichtungsprofil mit einer Umlenkrolle und einer Andrückrolle.

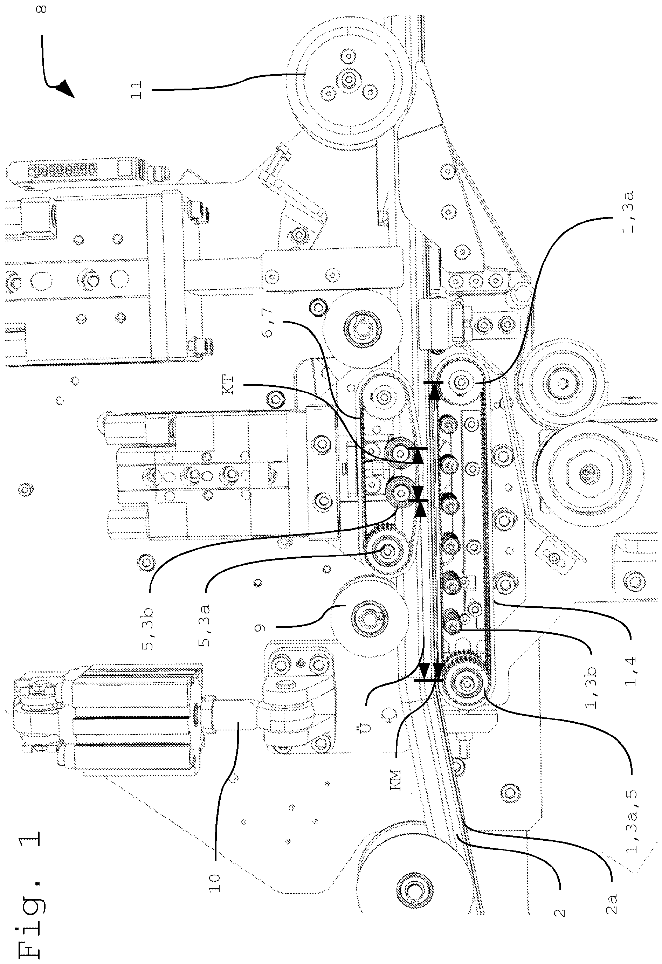

Die Figur 1 zeigt eine perspektivische Seitenansicht eines Applikationskopfes 5 einer Dichtungsprofilapplikationsvorrichtung (nicht dargestellt) mit einer Messvorrichtung 1 und einer Transportvorrichtung 6 für das zu applizierende Dichtungsprofil 2. Das Dichtungsprofil 2 ist aus Gummi gefertigt und als Hohlprofil ausgebildet. Die Seite des Dichtungsprofils 2, die auf das Karosserieteil (nicht dargestellt) aufgeklebt werden soll, ist mit einer Klebefläche versehen, wobei die Klebefläche mit einem als Trennband dienenden Kunststoffband 2a, einem sogenannten Liner 2a, bis unmittelbar vor dem Aufkleben abgedeckt ist. Das Dichtungsprofil 2 wird mittels der Transportvorrichtung 6 von einer Spule/Haspel (nicht dargestellt) abgezogen und zu einer Applikationsrolle 11 vorgeschoben, mittels der das Dichtungsprofil 2 auf das Karosserieteil (nicht dargestellt) 1 aufgeklebt/appliziert wird. Die Transportvorrichtung 6 umfasst hier zwei Umlenkrollen 3a und zwei Stützrollen 3b, über die ein endloses Transportband 7 umläuft. Das Transportband 7 ist ähnlich wie das Messband 4 als beschichteter Zahnriemen ausgeführt. Die Beschichtung ist dabei speziell auf die Oberflächenbeschaffenheit des Dichtungsprofils 2 abgestimmt. Das Transportband 7 drückt in einer auf dem Liner 2a gegenüberliegend angeordneten Seite des Dichtungsprofils 2 in einem Transportkontaktbereich KT gegen das Dichtungsprofil 2, so dass im Transportkontaktbereich KT eine Haftreibung zwischen Transportband 7 und Dichtungsprofil 2 bewirkt wird, die dazu führt, dass das Dichtungsprofil 2 mit dem Transportband 7 mitgeführt und somit zur Applikationsrolle 11 vorgeschoben wird. Hier wird das Dichtungsprofil 2 von links nach rechts vorgeschoben.

Als Gegenhalt für das Transportband 7 liegt das dem Transportband 7 gegenüberliegend angeordnete Messband 4 der Messvorrichtung 1. Das Transportband 7 dient wiederum als Gegenhalt für das Messband 4. So wird sowohl ein Andruck des Messbandes 4 als auch des Transportbandes 7 auf das Dichtungsprofil gewährleistet. Wie das Transportband 7 läuft das in sich geschlossene Messband 4 über zugehörige Umlenkrollen 3a um. Weiterhin sind am Messband 4 Stützrollen 3b angeordnet, die entlang des Messbandkontaktbereichs KM angeordnet sind, um das Messband 4 im gesamten Messbandkontaktbereich KM an das Dichtungsprofil 2 zu drücken und damit eine möglichst schlupffreie Haftung des Messbandes 4 auf dem Dichtungsprofil 2 zu ermöglichen.

Das endlose Messband 4 ist gleichfalls als beschichteter Zahnriemen ausgeführt, wobei die Beschichtung auf der dem Liner 2a zugewandten Seite angeordnet ist. Die Oberfläche des Messbandes 4 ist dementsprechend elastisch und glatt ausgeführt. Durch die Materialkombination der Oberfläche des Messbandes 4 mit der des Liners 2a wird eine adhäsive und somit haftende Wirkung erreicht. Damit kann das Dichtungsprofil 2 das Messband 4 unter Vermeidung von Schlupf mitbewegen.

Die Messvorrichtung 1 ist so ausgeführt, dass aufgrund der leichtgängigen Rollen 3a, 3b der Messvorrichtung 1 ein minimierter Widerstand realisiert wird. Dieser geringe Widerstand kann durch die Haftung leicht überwunden werden.

Die Messdatenerfassung wird durch einen Drehinkrementalgeber 5 realisiert, der in eine der Umlenkrollen 3a der Messvorrichtung 1 integriert ist. Der Drehinkrementalgeber 5 ist in der Lage, den Drehwinkel der betreffenden Umlenkrolle 3a zu erfassen, der zum Umlaufweg des Messbandes 4 und damit zur Länge des vorgeschobenen Dichtungsprofils 2 proportional ist. Eine Auswerteeinheit (nicht dargestellt) ermittelt aus dem Drehwinkel die Länge des vorgeschobenen Dichtungsprofils 2. Mit dem Setzen eines Schnittes des Dichtungsprofils 2 endet jeweils eine Längenmessung und es beginnt eine neue Längenmessung.

Erfindungsgemäß ist vorgesehen, dass der Messbandkontaktbereich KM deutlich länger ausgebildet ist als der Transportkontaktbereich KT.

Der sich länger erstreckende Messbandkontaktbereich führt vorteilhaft dazu, dass eine größere Kontaktfläche und damit eine größere Haftung des Messbandes am Liner realisiert wird. Damit ist ein Schlupf nahezu ausgeschlossen, so dass das Messergebnis wesentlich genauer als bei bekannten Messvorrichtungen ist. Vorteilhaft kann das Dichtungsprofil nicht durch Zähne, wie Anspruch 18 der Druckschrift WO 2016030131 A1 vorgeschlagen, beschädigt werden.

In einem Überstandsbereich Ü, in dem sich der Messbandkontaktbereich KM über den Transportkontaktbereich KT hinaus erstreckt, ist eine dem Messband 4 gegenüberliegende Andrückrolle 9 angeordnet. Durch die gegenüberliegende Andrückrolle 9 wird auch im Überstandsbereich Ü ein Gegendruck des Dichtungsprofils 2 auf das Messband 4 gewährleistet der vorteilhaft die Haftung am Liner verbessert. Alternativ oder zusätzlich zur Andrückrolle können auch andere Andrück- und Führungselemente wirkungsäquivalent angeordnet sein.

Hier ist der Applikationskopf 8 so ausgebildet, dass die Messvorrichtung 1 mittels einer als Hydraulikzylinder 10 ausgebildeten Verschiebevorrichtung 10 gegenüber der Transportvorrichtung 6 verschoben werden kann. Damit kann der Abstand von Messkontaktbereich KM und Transportkontaktbereich KT variiert und an die Stärke des Dichtungsprofils 2 und den gewünschten Anpressdruck des Messbandes 4 und des Transportbandes 7 an das Dichtungsprofil 2 angepasst werden. Vorzugsweise ist das Messband 4 auf der Außenseite, auf der es mit dem Liner 2a des Dichtungsprofils 2 in Kontakt kommt, mit einer glatten, elastischen und somit adhäsiv wirkenden Oberfläche ausgebildet. Als besonders geeignetes Material kommt hier beispielsweise Kautschuk zum Einsatz. Auf diese Weise kann im Messkontaktbereich KM eine gute Haftung des Messbandes 4 am Dichtungsprofil 2 und somit ein Schlupf verhindert werden. Dementsprechend kann die Längenmessung des vorgeschobenen Dichtungsprofils 2 mit höchster Präzision erfolgen.

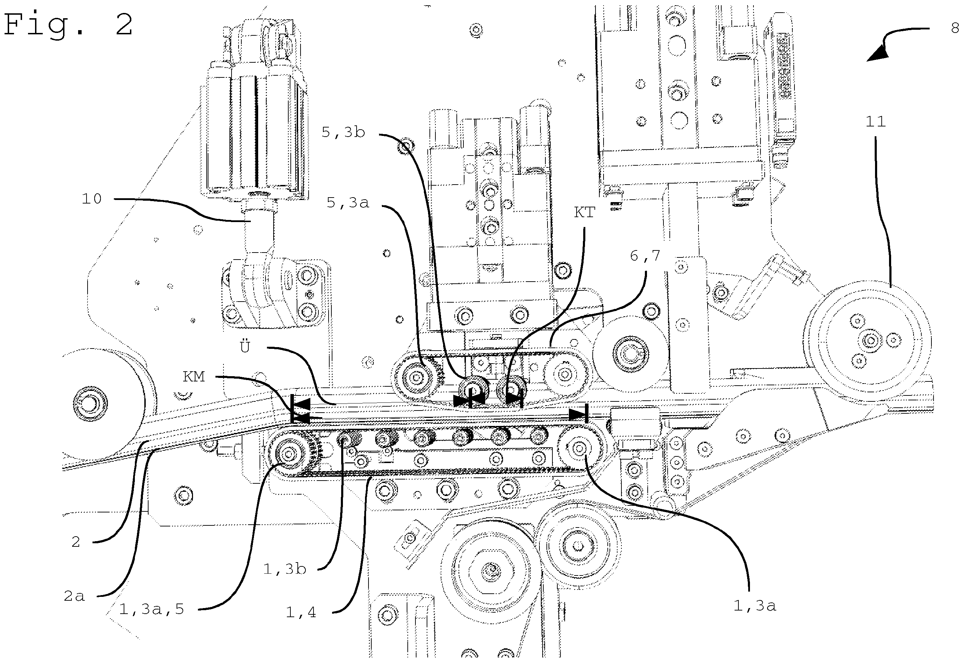

Die Figur 2 zeigt eine perspektivische Seitenansicht eines Applikationskopfes 8 einer Dichtungsprofilapplikationsvorrichtung mit einer Messvorrichtung 1 und einer Transportvorrichtung 6 sowie einem zu transportierenden und zu vermessenden Dichtungsprofil 2. Die Darstellung ist soweit aus Fig. 1 bekannt. Der Unterschied besteht darin, dass hier keine Andrückrolle vorgesehen ist. Der Andruck des Dichtungsprofils 2 auf das Messband 4 im Überstandbereich Ü erfolgt hier dadurch, dass das Dichtungsprofil 2 schräg von unten zugeführt und somit schon im Bereich der ersten Umlenkrolle 3a an das Messband 4 angedrückt wird. Damit entspricht die Darstellung der Ausführung gemäß Anspruch 1.

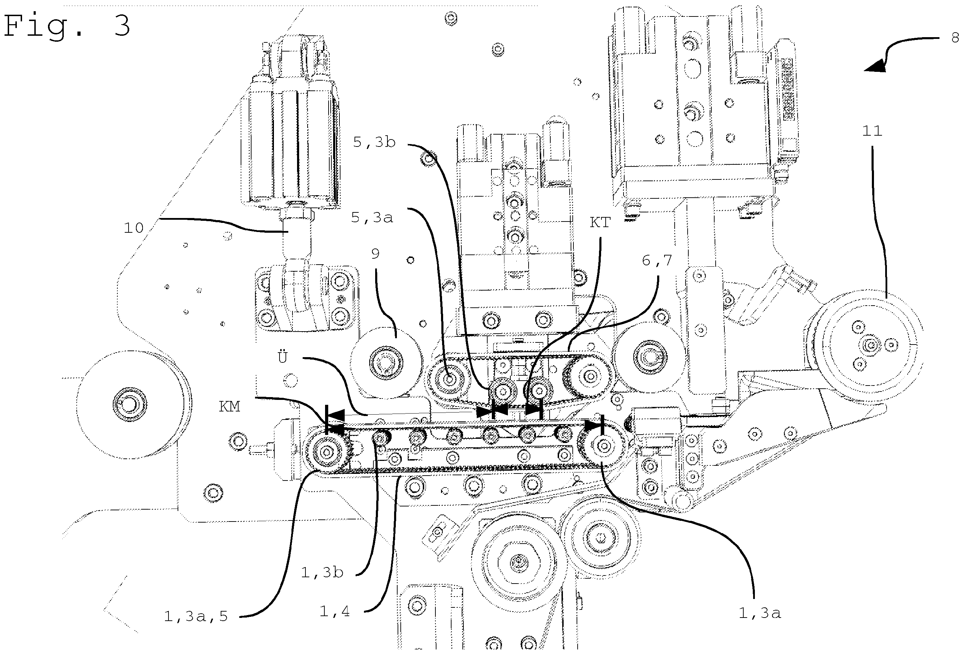

In Figur 3 ist eine perspektivische Seitenansicht eines Applikationskopfes 8 einer Dichtungsprofilapplikationsvorrichtung mit einer Messvorrichtung 1, einer Transportvorrichtung 6 und einer Andrückrolle 9 gezeigt. Dementsprechend ist in Fig. 3 die aus Fig. 1 bekannte Ausführung dargestellt, ohne dass das Dichtungsprofil hier abgebildet ist.

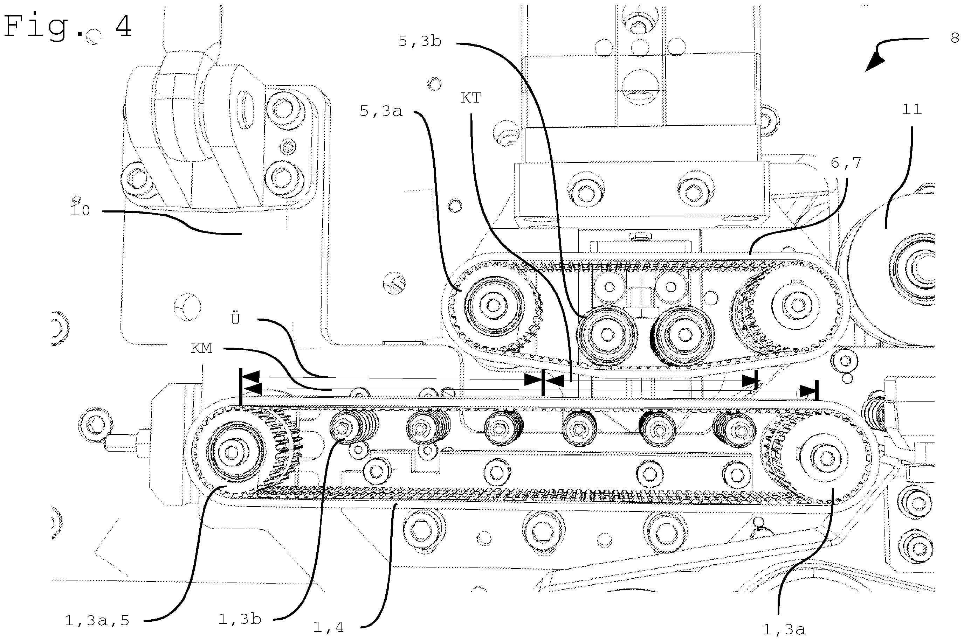

Die Figur 4 stellt eine perspektivische Seitenansicht eines Applikationskopfes 8 einer Dichtungsprofilapplikationsvorrichtung mit einer Messvorrichtung 1 und einer Transportvorrichtung 6 dar.

Damit ist hier die aus Fig. 2 bekannte Ausführung dargestellt, wobei das Dichtungsprofil hier nicht gezeigt ist.

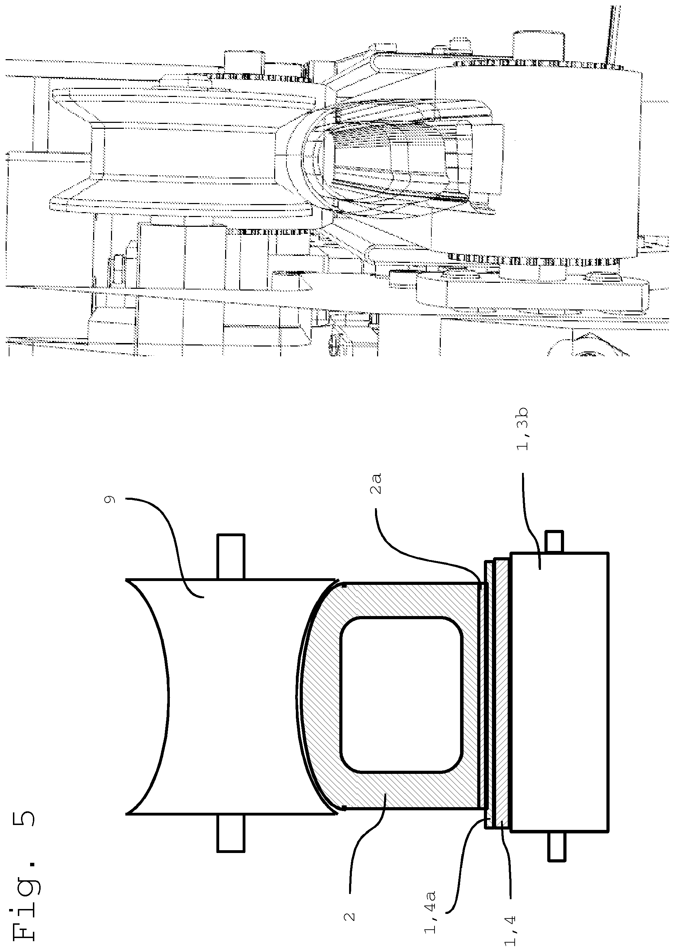

Die Figur 5 zeigt eine Schnittdarstellung durch das Messband 4 und das Dichtungsprofil 2 mit der Umlenkrolle 3a der Messvorrichtung 1 und der Andrückrolle 9.

Der Reibungskontakt zwischen dem Messband 4 und dem Dichtungsprofil 2 wird einerseits dadurch erreicht, dass durch die zusammendrückende Anordnung von Umlenkrolle 3a und Andrückrolle 9 das Messband 4 und das Dichtungsprofil 2 aneinandergepresst werden. Dabei ist auf der dem Messband 4 zugewandten Seite des Dichtungsprofils 2 ein Liner 2a zum Schutz der darunter befindlichen Klebefläche angeordnet. Andererseits wird die haftende Reibung zwischen Messband 4 und Dichtungsprofil 2 dadurch verstärkt, dass die Oberfläche des Messbandes 4 mit einer haftenden Beschichtung 4a versehen ist. Die haftende Beschichtung 4a ist so ausgeführt, dass eine adhäsive Wirkung auf die Oberfläche des Liners 2a herbeigeführt wird, die die Haftreibung zwischen Messband 4 und Dichtungsprofils 2 verbessert. Die Andrückrolle 9 ist mantelseitig so profiliert wie die daran anliegende Seite des Dichtungsprofils 2. Damit wird das Dichtungsprofil 2 gleichmäßig an das Messband 4 gedrückt. Eine Verformung des Dichtungsprofils 2 erfolgt dabei vorteilhafterweise nicht. Aufgrund der Profilierung erfolgt vorteilhaft zugleich eine seitliche Führung des Dichtungsprofils 2 im Applikationskopf.

### Zusammenstellung der Bezugszeichen

- 1 -: Messvorrichtung
- 2 -: Dichtungsprofil
- 2a-: Liner
- 3a -: Rolle, Umlenkrolle
- 3b -: Rolle, Stützrolle
- 4 -: Messband
- 4a -: dem Liner zugewandte Seite des Messbandes, Oberfläche/Beschichtung des Messbandes
- 5 -: Messwerterfassungssystem, Drehgeber, Drehinkrementalgeber
- 6 -: Transportvorrichtung
- 7 -: Transportband
- 8 -: Applikationskopf
- 9 -: Andrückrolle
- 10 -: Verschiebevorrichtung
- 11 -: Applikationsrolle

- KM -: Messkontaktbereich
- KT -: Transportkontaktbereich
- Ü -: Überstandsbereich

## Patentansprüche

1. Applikationskopf (8) einer Dichtungsprofilapplikationsvorrichtung, wobei der Applikationskopf (8) eine Messvorrichtung (1) zur Längenmessung von Dichtungsprofilen (2) aufweist,
wobei die Messvorrichtung (1) ein über mindestens zwei Rollen (3a, 3b) umlaufendes Messband (4) umfasst,
wobei mindestens eine der Rollen (3a, 3b) mit einem Messwerterfassungssystem (5) als Drehgeber (5) zusammenwirkt, wobei dem Messband (4) gegenüberliegend eine Transportvorrichtung (6) mit einem über Rollen (3a, 3b) umlaufendem Transportband (7) angeordnet ist, wobei zwischen dem umlaufenden Messband und dem umlaufenden Transportband das Dichtungsprofil vom Transportband bewegbar oder vorschiebbar ist und das Messband durch die Bewegung des Dichtungsprofils mitbewegbar ist,
wobei sich ein Messbandkontaktbereich (KM) des Dichtungsprofils (2) mit dem Messband (4) um einen Überstandsbereich (Ü) länger erstreckt als ein Transportkontaktbereich (KT) des Dichtungsprofils (2) mit dem Transportband (7) und gegenüberliegend zum Überstandsbereich (Ü) des Messbandes (4) auf der Seite des Transportbandes (7) mindestens eine Andrückrolle (9) angeordnet ist oder andere Führungs- und Andrückelemente (9) angeordnet sind.

2. Applikationskopf mit Messvorrichtung nach Anspruch 1, **dadurch gekennzeichnet,**
**dass** das Messband (4) auf der einem Liner (2a) des Dichtungsprofils (2) zugewandten Seite eine glatte, elastische und/oder adhäsive Oberfläche (4a) aufweist.

3. Applikationskopf mit Messvorrichtung nach Anspruch 2, **dadurch gekennzeichnet,**
**dass** die dem Liner (2a) des Dichtungsprofils (2) zugewandte Seite des Messbandes (4a) mit Kautschuk und/oder Polyurethan, ausgeführt.

4. Applikationskopf mit Messvorrichtung nach Anspruch 1, **dadurch gekennzeichnet,**
**dass** die Andrückrolle (9) und / oder die anderen Führungs- und Andrückelemente mantelseitig ein umlaufendes Profil aufweisen.

5. Applikationskopf mit Messvorrichtung nach Anspruch 4, **dadurch gekennzeichnet,**
**dass** das Profil (P) der Andrückrolle (9) und / oder die anderen Führungs- und Andrückelemente (9) konkav ausgebildet ist.

6. Applikationskopf mit Messvorrichtung nach Anspruch 4 oder 5,
**dadurch gekennzeichnet,**
**dass** das Profil (P) der Andrückrolle (9) und / oder die anderen Führungs- und Andrückelemente (9) mit dem anliegenden Profil des Dichtungsprofils (2) korrespondiert.

7. Applikationskopf mit Messvorrichtung nach einem der vorhergehenden Ansprüche,
**dadurch gekennzeichnet,**
**dass** die Messvorrichtung (1) gegenüber der Transportvorrichtung (6), mit oder ohne der Andrückrolle (9) oder der anderen Führungs- und Andrückelemente (9) und/oder
**dass** die Transportvorrichtung (6), mit oder ohne der Andrückrolle (9) und/oder der anderen Führungs- und Andrückelemente (9), gegenüber der Messvorrichtung (1) mittels mindestens einer Verschiebevorrichtung (10) verschiebbar angeordnet sind/ist.

8. Applikationskopf mit Messvorrichtung nach Anspruch 7, **dadurch gekennzeichnet,**
**dass** die Verschiebung der Messvorrichtung (1) und der Transportvorrichtung (6) in gleichem Maße erfolgt.

9. Applikationskopf mit Messvorrichtung nach einem der vorhergehenden Ansprüche, **dadurch gekennzeichnet,**
**dass** der Drehgeber (5) des Messwerterfassungssystem (5) als Drehinkrementalgeber (5) ausgebildet und in einer Rolle (3a, 3b) angeordnet ist.

## Claims

1. Application head (8) of a sealing profile application device, wherein the application head (8) has a measuring device (1) for measuring the length of sealing profiles (2), wherein the measuring device (1) comprises a measuring tape (4) rotating over at least two rollers (3a, 3b), wherein at least one of the rollers (3a, 3b) co-operates with a measured value acquisition system (5) as a rotary encoder (5), wherein a transport device (6) with a conveyor belt (7) circulating over rollers (3a, 3b) is arranged opposite the measuring tape (4), wherein the sealing profile can be moved or advanced by the conveyor belt between the circulating measuring tape and the circulating conveyor belt and the measuring tape can be moved by the movement of the sealing profile, wherein a measuring tape contact region (KM) of the sealing profile (2) with the measuring tape (4) extends longer by a projection region (Ü) than a transport contact region (KT) of the sealing profile (2) with the conveyor belt (7) and at least one pressure roller (9) is arranged opposite the projection region (Ü) of the measuring tape (4) on the side of the conveyor belt (7) or other guiding and pressure elements (9) are arranged.

2. Application head with measuring device according to claim 1, **characterised in**
**that** the measuring tape (4) has a smooth, elastic and/or adhesive surface (4a) on the side facing a liner (2a) of the sealing profile (2).

3. Application head with measuring device according to claim 2, **characterised in**
**that** the side of the measuring tape (4a) facing the liner (2a) of the sealing profile (2) is made of rubber and/or polyurethane.

4. Application head with measuring device according to claim 1, **characterised in**
**that** the pressure roller (9) and/or the other guide and pressure elements have a circumferential profile on the jacket side.

5. Application head with measuring device according to claim 4, **characterised in**
**that** the profile (P) of the pressure roller (9) and/or the other guide and pressure elements (9) is concave.

6. Application head with measuring device according to claim 4 or 5,
**characterised in**
**that** the profile (P) of the pressure roller (9) and / or the other guiding and pressure elements (9) correspond to the adjacent profile of the sealing profile (2).

7. Application head with measuring device according to one of the previous claims,
**characterised in**
**that** the measuring device (1) is positioned relative to the transport device (6), with or without the pressure roller (9) or the other guide and pressure elements (9)
and/or
in that the transport device (6), with or without the pressure roller (9) and/or the other guide and pressure elements (9), is/are arranged so as to be slidable relative to the measuring device (1) by means of at least one sliding device (10).

8. Application head with measuring device according to claim 7, **characterised in**
**that** the displacement of the measuring device (1) and the transport device (6) takes place to the same extent.

9. Application head with measuring device according to one of the previous claims,
**characterised in**
**in that** the measured value acquisition system (5) is designed as a rotary encoder (5), in particular as a rotary incremental encoder (5), and is arranged in a roller (3a, 3b).

## Revendications

1. Tête d'application (8) d'un dispositif d'application de profilés d'étanchéité, la tête d'application (8) présentant un dispositif de mesure (1) pour mesurer la longueur de profilés d'étanchéité (2),
le dispositif de mesure (1) comprenant une bande de mesure (4) circulant sur au moins deux rouleaux (3a, 3b), au moins l'un des rouleaux (3a, 3b)
coopérant avec un système de saisie des valeurs de mesure (5) en tant que capteur rotatif (5),
un dispositif de transport (6) avec une bande transporteuse (7) circulant sur des rouleaux (3a, 3b) étant disposé en face de la bande de mesure (4), le profilé d'étanchéité pouvant être déplacé ou avancé par la bande transporteuse entre la bande de mesure en circulation et la bande de transport en circulation, et la bande de mesure pouvant être déplacée en même temps par le mouvement du profilé d'étanchéité,
une zone de contact de bande de mesure (KM) du profilé d'étanchéité (2) avec la bande de mesure (4) s'étend plus longtemps d'une partie en saillie (Ü)
qu'une zone de contact de transport (KT) du profilé d'étanchéité (2) avec la bande de transport (7) et en ce qu'en face de la partie en saillie (Ü) de la bande de mesure (4), sur le côté de la bande transporteuse (7), est disposé au moins un rouleau de pression (9) ou sont disposés d'autres éléments de guidage et de pression (9).

2. Tête d'application avec dispositif de mesure selon la revendication 1,
**caractérisé en ce que**
la bande de mesure (4) présente une surface lisse, élastique et/ou adhésive (4a) sur le côté tourné vers un liner (2a) du profilé d'étanchéité (2).

3. Tête d'application avec dispositif de mesure selon la revendication 2,
**caractérisé en ce que**
le côté de la bande de mesure (4a) tourné vers le liner (2a) du profilé d'étanchéité (2) est réalisé avec du caoutchouc et/ou du polyuréthane.

4. Tête d'application avec dispositif de mesure selon la revendication 1,
**caractérisé en ce que**
le rouleau de pression (9) et / ou les autres éléments de guidage et de pression présentent un profilé périphérique du côté de l'enveloppe.

5. Tête d'application avec dispositif de mesure selon la revendication 4,
**caractérisé en ce que**
le profilé (P) du rouleau de pression (9) et / ou les autres éléments de guidage et de pression (9) sont concaves.

6. Tête d'application avec dispositif de mesure selon la revendication 4 ou 5,
**caractérisé en ce que**
le profilé (P) du rouleau de pression (9) et/ou les autres éléments de guidage et de pression (9) correspondent au profilé adjacent du profilé d'étanchéité (2).

7. Tête d'application avec dispositif de mesure selon l'une des revendications précédentes,
**caractérisé en ce que**
le dispositif de mesure (1) est monté par rapport au dispositif de transport (6), avec ou sans le rouleau de pression (9) ou les autres éléments de guidage et de pression (9).
et/ou
le dispositif de transport (6), avec ou sans le rouleau de pression (9) et/ou les autres éléments de guidage et de pression (9), sont/seront disposés de manière à pouvoir être déplacés par rapport au dispositif de mesure (1) au moyen d'au moins un dispositif de déplacement (10).

8. Tête d'application avec dispositif de mesure selon la revendication 7,
**caractérisé en ce que**
le déplacement du dispositif de mesure (1) et du dispositif de transport (6) s'effectue dans la même mesure.

9. Tête d'application avec dispositif de mesure selon l'une des revendications précédentes,
**caractérisé en ce que**
le système de saisie de valeurs de mesure (5) est conçu comme un capteur rotatif (5), en particulier comme un capteur incrémental rotatif (5), et est disposé dans un rouleau (3a, 3b) .
